# EUROPEAN PATENT SPECIFICATION

(11) **EP 0 441 177 B1**
(45) Date of publication and mention of the grant of the patent: **04.01.1995**
(21) Application number: 91100839.9
(22) Date of filing: 23.01.1991
(51) Int. Cl.: B60T 11/30, F16K 27/08

(54) **Bleed screw cap for hydraulic equipment**
Entlüftungsschraubkappe für eine hydraulische Vorrichtung
Capuchon pour vis de purge pour équipement hydraulique

(30) Priority: 26.01.1990 JP 5664/90 U
(43) Date of publication of application: 14.08.1991
(73) Proprietor: AKEBONO BRAKE INDUSTRY CO., LTD., Chuo-ku Tokyo (JP)
(72) Inventor: Tarui, Ken, Hanyu-shi, Saitama (JP); Aoyagi, Shinji, Hanyu-shi, Saitama (JP)
(74) Representative: Grünecker, Kinkeldey, Stockmair & Schwanhäusser Anwaltssozietät

(56) References cited:
- FR-A- 2 268 209
- GB-A- 2 031 858
- GB-A- 2 091 822
- US-A- 4 164 241
- US-A- 4 445 530

## Description

### BACKGROUND OF THE INVENTION

The present invention relates to a bleed screw cap for a hydraulic equipment, for example, an air bleed screw provided with a cylinder portion of such as a caliper member in a disc brake, and more particular to an elastic cap for protecting a plug which is provided for exhausting an air contained in the cylinder. Such a bleed screw cap is efficiently utilized for preventing rust, corrosion and fouling in the whole bleed screw.

With respect to a disc brake in a vehicle, when air remains within the cylinder of the caliper member, braking operation becomes to be reduced. For this reason, the air bleed screw is provided with the cylinder of the caliper member whereby air contained within the cylinder can be exhausted out. The air bleed screw is got muddy in driving and is contaminated by dust and the like so that an exhaust hole is clogged. Therefore, the air bleed screw cap is provided to the end of the air bleed screw in order to prevent above deficiencies. It is well known that the air cap is provided to the air bleed screw through a flexible piece for preventing the cap from losing.

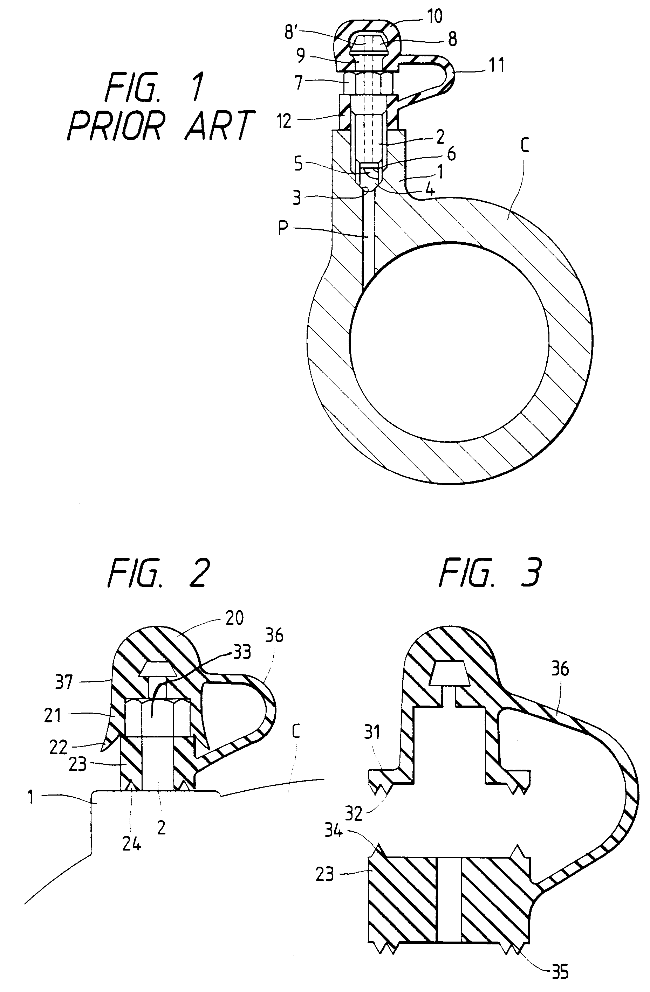

The conventional air bleed screw cap will now be described in detail with reference to Fig. 1.

As shown in Fig. 1, a boss 1 is provided to a cylinder C so as to be protruded therefrom. A needle valve 2 is screwed to the boss 1. A conical portion 4 formed on the end of the valve 2 is pushed against a valve seat 3 provided to the lower end of a screw hole of the boss 1 so that an exhaust port P of the cylinder is closed. An exhaust hole 5 is provided so as to be opened on the end portion of the needle valve 2. In addition, the lower end of the exhaust hole 5 is provided to be opened at the outer circumferential surface of a minor diameter portion 6 provided to the lower end of the valve 2.

The needle valve 2 has a hexagonal portion 7, a conical shaped head 8, and a neck portion 9. When the hexagonal portion 7 is loosened by a wrench, the needle valve 2 is loosened and the conical portion 4 provided to the end portion thereof is separated from the valve seat 3, as a result of which the exhaust hole 5 of the needle valve 2 is communicated with the exhausted port P of the cylinder C so that air contained within the cylinder C is exhausted out.

An elastic cap 10 is fitted with the head 8 of the needle valve 2 so that a exhaust port 8' of the exhaust hole 5 is prevented from clogging. The elastic cap 10, the flexible piece 11 and the holding ring 12 is provided integrally with each other in order to prevent the elastic cap from losing. Additionally, the holding ring 12 is fixedly secured to the hexagonal porion 7 .

As described above, since the conventional air bleed screw cap is provided for covering the head 8 of the needle valve 2, there may be achieved the effect for protecting the head 8 and the effect for preventing the exhaust port 8' from clogging. However, the conventional needle valve 2 thus constructed suffers from the following problems. During the period of use, rain water or mud water is flowed into the engaging portion between the needle valve 2 and the screw hole of the boss 1 so that undesirable rust, corrosion and contamination is occurred, and that the hexagonal portion 6 is corroded and damaged remarkably.

From GB-A-2 031 858 a bleed screw cap for a hydraulic equipment bleed screw is known having a major diameter step portion and a stem portion, comprising: a holding ring made of a compressible elastic material having a lower end surface which sealingly contacts a main body of the hydraulic equipment, and an upper end surface having an inner portion which sealingly contacts the major diameter step portion thereby forming a first seal, and an outer portion having a sealing surface, and an elastic cap.

The special nature of the bleed screw according to GB-A-2 031 858 requires prevention of foreign matter from contacting the valve stem to a complete seal, which must be made around the cylinder boss to cover the entire valve. The valve unit of GB-A-2 031 858, however, is not completely enclosed. Although a holding ring between the equipment housing and the hexagonal nut is disclosed, the cap does not contact the holding ring, thus leaving the hexagonal nut exposed, failing to make a complete seal around the valve.

It is, therefore, an object of the present invention to provide a bleed screw cap for a hydraulic equipment bleed screw, according to the pre-characterising part of claim 1, with which it is assured that the entire bleed screw is isolated from invading liquids and solid particles.

This object is achieved by the characterising part of claim 1.

According to the present invention, said elastic cap is removable from sealing contact with the bleed screw and the holding ring, the cap having a bottom portion, said bottom portion having a skirt portion, said skirt portion having a sealing surface which sealingly contacts at least one surface of the outer portion of the upper end surface of the holding ring forming a second seal.

According to the present invention, when the hexagonal portion is strongly fastened so as to close the needle valve, the holding ring is pushed between the under surface of the hexagonal portion and the upper surface of the boss. In this condition, since the axial compressibility of the holding ring is high, the needle valve can be fastened furthermore after the under surface of the hexagonal portion is attached to the upper surface of the holding ring. Therefore, the conical portion of the under end of the needle valve is strongly pushed against the valve seat so that the valve is surely closed. In addition, the under surface of the holding ring is strongly pushed against the upper surface of the boss of the cylinder so that rain water, mud water and so on can be surely prevented from flowing from the gap between the under surface of the holding ring and the upper surface of the boss into the engaging portion between the needle valve and the cylinder boss.

When the elastic cap is fitted with the head of the needle valve, the skirt portion of the elastic cap covers the hexagonal portion and the seal lip attached to the skirt is fitted on the upper end of the holding ring so that rain water, mud water and so on can be prevented from flowing from the gap between the skirt portion and the holding ring into the engaging portion between the needle valve and the cylinder boss.

Therefore, the engaging portion between the head of the needle valve or the hexagonal portion and the boss of the cylinder can be completely covered and sealed by the elastic cap and the holding ring.

### BRIEF DESCRIPTION OF THE DRAWINGS

Fig. 1 is a cross-sectional view of a conventional bleed screw cap;
Fig. 2 is a cross-sectional view of a bleed screw cap according to an embodiment of the present invention; and
Fig. 3 is a cross-sectional view of a bleed screw cap according to an another embodiment of the present invention.

### DETAILED DESCRIPTION OF THE PREFERRED EMBODIMENT

A preferred embodiment of an air bleed screw cap of the present invention will now be described in detail with reference to Figs. 2 and 3.

As shown in Figs. 2 and 3, a cylindrical shaped skirt portion 21 is provided to protrude downwardly from a bottom portion 37 of an elastic cap 20. The end of the skirt portion 21 is elongated outwardly to be shaped like a cone so that a seal lip 22 is formed. The length of a holding ring 23 is provided to be longer than the space between an under surface of a hexagonal portion 33 and an upper surface of a boss 1 of a cylinder C in the case where a valve is opened. In addition, an inverted V-shaped annular groove 24 is provided to the under surface of the holding ring 23 in order to enhance compressibility for the holding ring 23 in the axial direction. According to the inverted V-shaped annular groove 24, the under end portion of the holding ring 23 can be easily compressed in the axial direction. Therefore, when the hexagonal portion 33 is rotated by a wrench and the like and the needle valve is closed, the under end of the holding ring 23 is elastically transformed in the axial direction and strongly pressed against the upper surface of the boss 1 by the elastic force.

When a elastic cap 20 is fitted with the head 8 of the needle valve 2, the hexagonal portion 21 is covered with the skirt portion 21 and the seal lip 22 attached to the skirt portion 21 is pressed to fit on the upper surface of the holding ring 23.

In the case where the holding ring 23 is made of high elastic material, since the resisting power for compressing the holding ring in the axial direction becomes to be small, there is no need to provide the annular groove 24. In addition, since the under end of the skirt portion 21 is elongated outwardly to be formed like a cone, the end of the skirt portion 21 covers the upper surface of the holding ring 23 and the inner surface of which is pressed against the outer surface of the holding ring 23. Therefore it is not necessary that the thickness of the under end of the skirt portion 23 is particularly provided to be thin. In short, when the needle valve is closed, it is to be desired that the closing operation of the valve is not interfered with the holding ring 23 and the holding ring 23 is strongly pressed against the upper surface of the boss 1 so that the contact surface therebetween is surely sealed. In addition, when the cap 20 is fitted with the head 8, it is also to be desired that the end of the skirt portion 21 is pressed against the holding ring 23 so that the contact surface therebetween is surely sealed.

If above condition is fulfilled, any shape and any structure of the seal lip seal attached to the skirt portion and the holding ring may be provided.

Fig. 3 shows an another embodiment of the present invention. In this embodiment, an annular flange 31 is provided to the end of the skirt portion and a V-shaped annular seal lips 32 are provided to the under surface of the flange 31. In this case, if an annular seal lip 34 which is engaged between annular lips 32 and 32 is provided to the upper surface of the holding ring 23, the gap between the flange 31 and the upper surface of the holding ring 23 is more surely sealed.

In addition, since the restrictive stroke of the needle valve ( ,that is, movement of the valve body from the fully closed state to the open state) is minute, if the annular seal lip of which height is within the range of 2-3 mm is provided to the under surface of the holding ring 23, axial compressibility of the holding ring 23 is ensured by compression in the axial direction of the annular seal lip.

Further, the cap 20 and the holding ring 20 are connected integrally with the flexible piece 11 so that the cap can be prevented from losing.

As described above, the present invention eliminate the above difficulties of the conventional air bleed screw cap of caliper member. Therefore, there can be achieved the effect of rust-proof and anti-corrosion in the bleed screw. Further, durability of the air bleed screw can be remarkably enhanced.

For instance, it may be eliminates the above difficulties by taking the following measures. The skirt portion of the elastic cap is elongated and the under end of which is attached to the upper surface of the boss 1. However, in this case, since the flexible piece interferes with the bleed screw cap, a notch should be provided to the skirt portion, whereby the gap between the holding ring and the cap is incompletely sealed. Further, since the length of the skirt portion becomes to be long, attaching or detaching operation of the cap is not easy.

On the other hand, in the present invention, since the length of the skirt portion is provided to be short, there is no problem as described above in attaching or detaching operation of the cap.

Therefore, with respect to the present invention, there can be achieved excellent advantages that the engaging portion between the needle valve and the boss can be completely sealed by taking simple measures which is improved the conventional structure.

## Claims

1. A bleed screw cap for a hydraulic equipment bleed screw having a major diameter step portion and a stem portion, comprising:
a holding ring (23) made of a compressible elastic material having a lower end surface which sealingly contacts a main body (1) of the hydraulic equipment, and an upper end surface having an inner portion which sealingly contacts the major diameter step portion thereby forming a first seal, and an outer portion having a sealing surface; and
an elastic cap (20) **characterised in that** said elastic cap (20) is removable from sealing contact with the bleed screw and the holding ring (23), the cap (20) having a bottom portion, said bottom portion having a skirt portion (21), said skirt portion (21) having a sealing surface which sealingly contacts at least one surface of the outer portion of the upper end surface of the holding ring (23) forming a second seal.

2. A bleed screw cap according to claim 1, further comprising a flexible member (36) connecting said holding ring (23) with said elastic cap (20) for preventing said elastic cap (20) from becoming separated and lost.

3. A bleed screw cap according to claim 1 or 2, wherein said at least one sealing surface is a seal lip (22).

4. A bleed screw cap according to claim 1 or 2, wherein said sealing surface is an annular flange (31).

5. A bleed screw cap according to claim 4, wherein first annular seal lips (32) are provided to the under surface of said annular flange (31) and a second annular seal lip (34) is provided to the upper surface of said holding ring (23) so as to be engaged with said first annular seal lips (32).

6. A bleed screw cap according to claim 4 or 5, wherein third annular seal lips (35) are provided to the lower surface of said holding ring (23).

## Patentansprüche

1. Entlüftungsschraubkappe für eine einen Stufenabschnitt großen Durchmessers und einen Halsabschnitt aufweisende Entlüftungsschraube einer hydraulischen Vorrichtung, die aufweist:
einen Haltering (23) aus zusammendrückbarem elastischem Material, der eine untere Endfläche aufweist, die dichtend einen Hauptkörper (1) der hydraulischen Vorrichtung berührt, und eine obere Endfläche, die einen inneren Abschnitt aufweist, der den Stufenabschnitt großen Durchmessers berührt, dadurch eine erste Dichtung bildend, und einen äußeren Abschnitt, der eine Dichtungsfläche aufweist; und
eine elastische Kappe (20), **dadurch gekennzeichnet,** daß die elastische Kappe (20) sich von der dichtenden Berührung mit der Entlüftungsschraube und dem Haltering (23) entfernen läßt, die Kappe (20) einen unteren Abschnitt aufweist, der untere Abschnitt einen Randabschnitt (21) aufweist, der Randabschnitt (21) eine Dichtungsfläche aufweist, die zumindest eine Oberfläche des äußeren Abschnittes der oberen Endfläche des Halterings (23) dichtend, eine zweite Dichtung bildend, berührt.

2. Entlüftungsschraubkappe nach Anspruch 1, die weiterhin ein den Haltering (23) mit der elastischen Kappe (20) verbindendes, biegsames Glied (36) aufweist, zur Vermeidung des Getrenntwerdens oder Verlierens der elastischen Kappe (20).

3. Entlüftungsschraubkappe nach Anspruch 1 oder 2, bei der zumindest eine Dichtungsfläche eine Dichtlippe (22) ist.

4. Entlüftungsschraubkappe nach Anspruch 1 oder 2, bei der die Dichtungsfläche ein ringförmiger Flansch (31) ist.

5. Entlüftungsschraubkappe nach Anspruch 4, bei der erste ringförmige Dichtlippen (32) an der Unterseite des ringförmigen Flansches (31) vorgesehen sind, und eine zweite ringförmige Dichtlippe (34) derart an der Oberseite des Halterings (23) vorgesehen ist, um mit den ersten ringförmigen Dichtlippen (32) in Eingriff bringbar zu sein.

6. Entlüftungsschraubkappe nach Anspruch 4 oder 5, bei der dritte ringförmige Dichtlippen (35) an der Unterseite des Halterings (23) vorgesehen sind.

## Revendications

1. Capuchon de vis de purge pour vis de purge d'équipement hydraulique, comprenant une partie épaulement de grand diamètre et une partie tige, ce capuchon comprenant :
une bague de retenue (23) faite d'une matière élastique compressible et possédant une surface d'extrémité inférieure qui entre en contact étanche avec un corps principal (1) de l'équipement hydraulique, et une surface d'extrémité supérieure ayant elle-même une partie intérieure qui entre en contact étanche avec la partie épaulement de grand diamètre, en formant de cette façon un premier joint étanche, et une partie extérieure présentant une surface d'étanchéité ; et
un capuchon élastique (20) caractérisé en ce que ledit capuchon élastique (20) peut être écarté du contact étanche avec la vis de purge et avec la bague de retenue (23), le capuchon (20) ayant une partie inférieure, ladite partie inférieure ayant une partie jupe (21), ladite partie jupe (21) ayant une surface d'étanchéité qui entre en contact étanche avec au moins une surface de la partie extérieure de la surface d'extrémité supérieure de la bague de retenue (23) pour former un deuxième joint étanche.

2. Capuchon de vis de purge selon la revendication 1, comprenant en outre un élément flexible (36) qui relie ladite bague de retenue (23) audit capuchon élastique (20) pour empêcher ledit capuchon élastique (20) de se détacher et de se perdre.

3. Capuchon de vis de purge selon la revendication 1 ou 2, dans lequel ladite au moins une surface d'étanchéité est une lèvre d'étanchéité (22).

4. Capuchon de vis de purge selon la revendication 1 ou 2, dans lequel ladite surface d'étanchéité est une collerette annulaire (31).

5. Capuchon de vis de purge selon la revendication 4, dans lequel des premières lèvres d'étanchéité annulaires (32) sont prévues sur la surface inférieure de ladite collerette annulaire (31) et une deuxième lèvre d'étanchéité annulaire (34) est prévue sur la surface supérieure de ladite bague de retenue (23) de manière à être mise en prise avec lesdites premières lèvres d'étanchéité annulaires (32)

6. Capuchon de vis de purge selon la revendication 4 ou 5, dans lequel des troisièmes lèvres d'étanchéité annulaires (35) sont prévues sur la surface inférieure de ladite bague de retenue (23).
